# EUROPÄISCHE PATENTSCHRIFT

(11) **EP 0 622 583 B1**
(45) Veröffentlichungstag und Bekanntmachung des Hinweises auf die Patenterteilung: **16.12.1998**
(21) Anmeldenummer: 94106161.6
(22) Anmeldetag: 21.04.1994
(51) Int. Cl.: F16L 55/165, F16L 1/036

(54) **Verfahren und Rohrleitung zum Verlegen unterirdischer Rohrleitungen**
Method and pipeline for installment of undergroud pipelines
Procédé et conduite pour l'installation de conduites souterraines

(30) Priorität: 30.04.1993 DE 4314288
(43) Veröffentlichungstag der Anmeldung: 02.11.1994
(73) Patentinhaber: Gelsenwasser AG, D-45891 Gelsenkirchen (DE)
(72) Erfinder: Kleinau, Artur, D-45892 Gelsenkirchen (DE); Krietenbrink, Heiner, F-45892 Gelsenkirchen (DE)
(74) Vertreter: Bergen, Klaus, Dipl.-Ing.

(56) Entgegenhaltungen:
- EP-A- 0 082 223
- EP-A- 0 337 031
- WO-A-80/00998
- DE-A- 4 003 747
- FR-A- 1 573 710
- US-A- 3 887 983
- US-A- 4 318 639
- US-A- 4 796 669

## Beschreibung

Die Erfindung betrifft ein Verfahren und eine Vorrichtung zum Verlegen unterirdischer Rohrleitungen.

In zunehmendem Maße wird das Finden von Trassen und das Neuverlegen innerstädtischer Leitungen schwieriger. Dabei ist nicht nur der geringe verbliebene Freiraum im Straßenkörper zur Aufnahme neuer Leitungen von Bedeutung, sondern auch der Wert der betroffenen Oberflächen. Darüber hinaus werden die Auflagen der Straßenverkehrsbehörden und insbesondere der Grünflächenämter immer bedeutender. Nicht zu vergessen ist dabei der ständig knapper und teurer werdende Deponieraum für den ausgehobenen Boden sowie die Kosten für den erforderlichen Bodenersatz, ganz zu schweigen von den damit verbundenen Belästigungen hinsichtlich sowohl der Verkehrsführung als auch insbesondere des Lärms.

Aus der französischen Patentschrift 1 573 710 ist ein Verfahren bekannt, mit dem alte Rohrleitungen saniert werden können, indem in die bestehende Rohrleitung zwei Einschnitte eingebracht und im Bereich eines der Einschnitte Teile der neuen Rohrleitung nach und nach in die bestehende Rohrleitung eingeführt werden; der zweite Einschnitt dient dazu, eine die neuen Rohrabschnitte durch das bestehende Rohr ziehende Vorrichtung anzubringen. Dabei werden an die Unterseite der neuen Rohrabschnitte Gleitkufen angesetzt.

Diese Gleitkufen bringen den Nachteil mit sich, daß sie an in den zu erneuernden Rohren befindlichen Unebenheiten hängen bleiben und dann, insbesondere bei langen zu ersetzenden Strecken, ein Einziehen der neuen Rohrstücke verhindern. Zudem dreht sich der neue Rohrstrang beim Einziehen, so daß sich die Gleitkufen nicht immer auf der Unterseite befinden und es zum direkten Aufliegen des neuen Rohrstrangs auf der alten Leitung kommen kann, was Beschädigungen der Korrosionsschicht der Rohrstücke mit sich bringt.

Darüber hinaus engen die Gleitkufen den nutzbaren Querschnitt der alten Rohrleitungen stark ein, so daß der Durchmesserunterschied zwischen der bestehenden und der neu eingebrachten Leitung relativ groß zu wählen ist.

Der Erfindung liegt daher das Problem zugrunde, ein Verfahren zum Verlegen unterirdischer Rohrleitungen zu schaffen, das die erwähnten Nachteile vermeidet und insbesondere ohne Gleitkufen oder Abstandhalter auskommt.

Die Lösung für die beiden infrage kommenden Rohrtypen (Guß- bzw. Stahlrohre) ist im Anspruch 1 bzw. 2 angegeben. Zur Minderung der Gleitreibung können die einzelnen Rohre und ihre Hilfsmittel zudem mit Schmierseife oder Bentonit eingestrichen werden.

Das erfindungsgemäße Verfahren läßt sich stets dann durchführen, wenn der Durchmesser der neuen Rohrleitung geringer sein kann als der einer nicht mehr benötigten bzw. zu ersetzenden alten Rohrleitung und sich auf die Benutzung dieser Rohrleitung für die Dauer der Bauzeit verzichten läßt, und erforderlichenfalls eine Ersatzversorgung in vertretbarem Maße durchführbar ist. Die Einzelstrecken zwischen der Ziehgrube und der Einfädelgrube können abhängig von Rohrmaterial und Rohrverbindung sowie von der Führung der Trasse und der Gradiente bis zu mehreren hundert Metern betragen.

Bei Verwendung von neuen Rohrstücken aus Stahl werden solche mit einem doppelten Kunststoff-Außenschutz vornehmlich in Rippenlängsform verwendet. Dieser doppelte Korrosionsschutz gewährleistet die Verhinderung von Beschädigungen. Die stumpfgestoßenen Rohrstücke aus Stahl werden untereinander und mit dem Rohrführungskopf verschweißt. Eine Anpassung an einen bogenförmigen Verlauf der alten Rohrleitung ist nur im Rahmen der Biegung des Stahlrohrs, die, abhängig vom Durchmesser, mehr oder weniger gering ist und die sich scharfen Krümmungen und Knicken nicht anpassen läßt, möglich.

Bei weniger geraden Trassen und Gradienten werden daher vorzugsweise neue Rohrstücke aus Gußeisen, insbesondere duktilem Gußeisen verwendet, die sich untereinander und mit dem Rohrführungskopf mittels zugfester Muffen, beispielsweise durch Verriegelung oder Verkrallung mittels metallischer Elemente zwischen Muffe und Einsteckende des benachbarten Rohres, verbinden lassen. Im Bereich dieser Muffenverbindungen ist eine gewisse Gelenkigkeit gegeben, die eine Abwinklung zuläßt, wodurch eine Anpassung an einen ungeraden Leitungsverlauf möglich ist.

Um bei diesen Rohrstücken ein Hängenbleiben an Vorsprüngen und/oder Absätzen der alten Rohrleitung und ein Beschädigen der Korrosionsschutzbeschichtung zu vermeiden, wird erfindungsgemäß jede Muffenverbindung der neuen Rohrleitung beim Einbringen in die alte Rohrleitung mittels einer übergestülpten, konischen Blechhülse geführt, die sowohl das erwähnte Hängenbleiben als auch eine Beschädigung der Korrosionsschutzbeschichtung verhindern.

Rohrleitungen mit festen und/oder losen Ablagerungen werden mit Kratzmolchen und Gummischeibenmolchen gereinigt und mit einer selbstfahrenden Videokamera mit Neigungsmeßeinrichtung inspiziert. Die Kamerafahrt wird auf Videoband aufgezeichnet, und die Neigungen und der momentane Kamerastand werden im angeschlossenen Computer archiviert. Nach Abschluß der Fahrt kann ein Computerausdruck den Gradientenverlauf darstellen.

Die Rohrstücke könnten zwar durch den Rohrführungskopf geführt, durch die alte Rohrleitung gedrückt werden, vorzugsweise werden sie jedoch mittels eines am Rohrführungskopf befestigten Zugseils von der Ziehgrube aus durch die alte Rohrleitung gezogen. Der Rohrführungskopf ist dabei vorzugsweise konisch ausgebildet, so daß er mit seinem Vorderende nicht an Vorsprüngen oder Absätzen der alten Rohrleitung hängenbleibt und die neue Rohrleitung auf der Sohle der alten Rohrleitung führt.

Nach dem vollständigen Verlegen der neuen Rohrleitung in der alten Rohrleitung zwischen der Ziehgrube und der Einfädelgrube läßt sich der Ringraum zwischen der alten und der neuen Rohrleitung mit einem fließfähigen, hydraulisch abbindenden Material verfüllen, welches die neue Rohrleitung in der alten Rohrleitung positioniert und aufgrund seiner basischen Eigenschaft zusätzlich vor Korrosion schützt.

Soll an der neuen Rohrleitung eine Abzweigung, z.B. eine Hausanschlußleitung angebracht werden, kann die alte Rohrleitung in diesem Bereich aufgetrennt, das Füllmaterial entfernt und auf diese neue, freigelegte Rohrleitung in bekannter Weise ein Stutzen aufgeschweißt oder eine Anbohrschelle umgelegt werden.

Eine erfindungsgemäße Rohrleitung zum zerstörungsfreien Verlegen in alten Rohrleitungen ist in Anspruch 8 definiert.

Die Erfindung wird nachstehend anhand eines in der Zeichnung dargestellten Ausführungsbeispiels näher erläutert. In der Zeichnung zeigen:

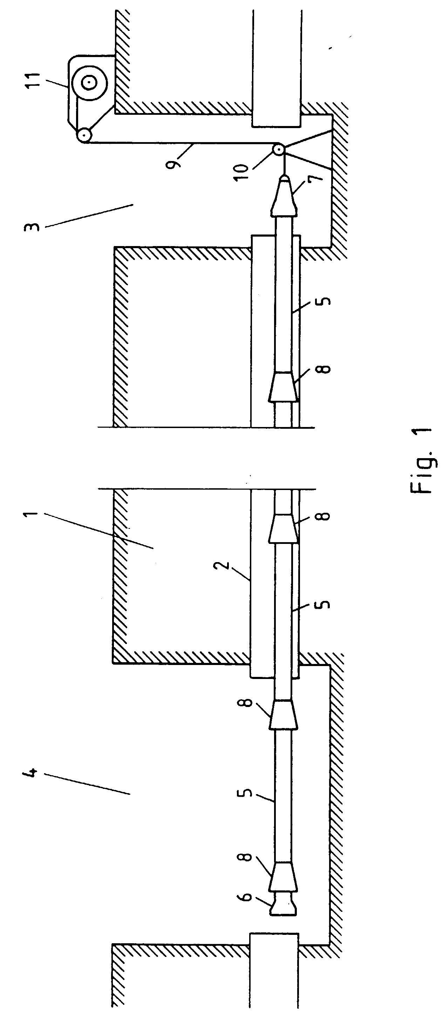

- Fig. 1: eine schematische Darstellung des Verlegens einer Rohrleitung in einer bereits bestehenden; und
- Fig. 2: eine Detailansicht einer neuen Rohrleitung mit Darstellung des Rohrführungskopfs und der Rohrführungshülse.

Um eine neue Rohrleitung in einer bereits vorhandenen, zu erneuernden Rohrleitung verlegen zu können, wird gegebenenfalls zunächst eine Ersatzversorgungsleitung parallel zur alten Rohrleitung verlegt und in Betrieb genommen. Die alte Rohrleitung wird daraufhin außer Betrieb genommen und entleert. In Abständen von bis zu mehreren hundert Metern, sofern die bisherige Rohrleitung in diesem Bereich keine starke Krümmung und Knicke aufweist, werden im Erdreich 1, in der die bisherige Rohrleitung 2 verlegt ist, Ziehgruben 3 und Einfädelgruben 4 entsprechend der Leitungslage in der erforderlichen Anzahl an geeigneter Stelle angeordnet. Im Bereich der Ziehgrube 3 und der Einfädelgrube 4 wird die bisherige Rohrleitung getrennt. Während in der Ziehgrube 3 die Trennstelle relativ kurz sein kann, muß die Trennstelle in der Einfädelgrube 4 so lang sein, daß sich neue Rohrstücke 5 in die alte Rohrleitung 2 einfädeln lassen.

Bevor Rohrstücke 5 in die Rohrleitung 2 eingefädelt werden, erfolgt zunächst eine mechanische Reinigung der alten Rohrleitung 2 durch Kratzmolche sowie gegebenenfalls eine Inspektion der einzelnen Leitungsabschnitte mittels Videokamera. Vorzugsweise kann dabei gleichzeitig eine Höhen- und Neigungsmessung durchgeführt und graphisch dargestellt werden. Bei dem dargestellten Ausführungsbeispiel wird daraufhin ein Zugseil in die alte Rohrleitung 2 eingebracht und von der Ziehgrube zur Einfädelgrube 4 oder umgekehrt geführt.

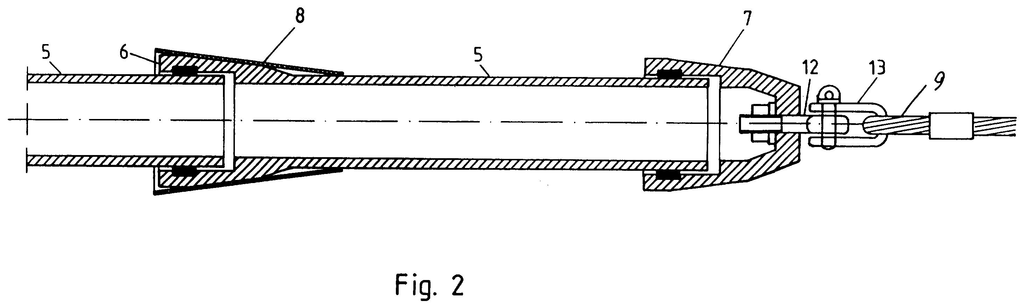

Das Zugseil 9 ist, wie aus Fig. 2 ersichtlich, über einen Schäkel 13 und einen Zuganker 12 mit einem konischen Rohrführungskopf 7 verbunden, der an seinem Ende wie eine Muffe 6 eines Muffenrohrstücks 5 geformt ist und sich mit dem Spitzende des Rohrstücks 5 verbinden läßt. Mittels des Seils 9, das über eine Umlenkrolle 10 oder bei längeren Ziehgruben ohne Umlenkrolle in der Ziehgrube 3 zu einer oberirdisch angeordneten Winde 11 geführt ist, läßt sich ein Muffenrohrstück 5 jeweils so weit in die alte Rohrleitung 2 einziehen, daß sich in der Einfädelgrube ein weiteres Muffenrohrstück 5 mit der Muffe 6 mit dem bereits zumindest teilweise eingezogenen Muffenrohrstück 5 verbinden läßt.

Auf jedes Muffenrohrstück wird vor dem Verbinden mit dem vorhergehenden Muffenrohrstück 5 eine konische Blechhülse 8 aufgesteckt, die nach dem Verbinden des Muffenrohrstücks 5 mit der vorhergehenden Muffe 6 über diese geschoben wird. Diese konische Blechhülse 8 dient genauso wie der konische Rohrführungskopf 7 dazu, die Muffenrohrstücke 5 in der alten Rohrleitung 2 zu führen, ein Hängenbleiben an Absätzen und Vorsprüngen in der alten Rohrleitung 2 zu verhindern und als schützende Gleitstücke die Beschädigung der korrosionsschützenden Beschichtung der Muffenrohrstücke 5 im Bereich der Muffen 6 zu vermeiden. Um die Reibung beim Einziehen bzw. Schieben der Muffenrohrstücke 5 in der alten Rohrleitung 2 zu verringern, werden zumindest der konische Rohrführungskopf 7 und die konischen Blechhülsen 8 mit Schmierseife bzw. Bentonit behandelt. Die einzelnen Teilstrecken zwischen den Ziehgruben 3 und den Einfädelgruben 4 werden innerhalb der Einfädelgruben 4 zu einem kompletten Strang verbunden. Bei der Verbindung benachbarter Einzugsabschnitte in der Einfädelgrube bzw. in der Ziehgrube können zum Ausgleich von Längenänderungen Dehnerelemente eingebaut werden.

Beim Verlegen von Stahlrohren wird entsprechend verfahren, jedoch werden Stahlrohre nicht durch Muffen, sondern zweckmäßigerweise durch Stumpfschweißen miteinander verbunden. Die Schweißstelle muß in diesem Fall wieder mit einer Korrosionsschutzschicht versehen werden. Da die Schweißverbindung zwischen den neuen Rohrstücken praktisch absatzfrei ist, wird nur eine Führung des vordersten Rohrendes mittels eines konischen Rohrführungskopfs benötigt. Es werden keine Abstandhalter eingesetzt; vielmehr findet Stahlrohr mit doppeltem Kunststoff-Außenschutz, vornehmlich in Längsrippenform, Verwendung. Verschweißte Stahlrohre lassen sich indessen nur in alten Rohrleitungen ohne scharfe Bögen und Knicke verlegen, da sich Stahlrohre nur begrenzt und mit großen Radien beim Einziehen in alte Rohrleitungen elastisch biegen lassen.

Nach dem Einziehen der aus Rohrstücken 5 bestehenden neuen Rohrleitung in die alte Rohrleitung 2 wird der verbleibende Ringraum zwischen diesen mit einem hydraulisch abbindenden, fließfähigen Material verfüllt, und die Zieh- und Einfädelgruben 3,4 werden sodann mit Erdreich aufgefüllt.

Zum Herstellen von Abzweigen bzw. Hausanschlußleitungen werden an der entsprechenden Stelle eine Grube ausgehoben, die alte Rohrleitung 2 aufgeschnitten, das Füllmaterial beseitigt und in bekannter Weise Stutzen aufgeschweißt oder Anbohrschellen umgelegt.

Statt die neue Rohrleitung durch die alte Rohrleitung mittels eines Zugseils hindurchzuziehen, lassen sich die miteinander verbundenen Rohrstücke auch von der Einfädelgrube 4 in Richtung zur Ziehgrube 3 mittels einer geeigneten Vorrichtung in die alte Rohrleitung 2 hineindrücken. Auch in diesem Fall ist ein auf das vorderste Rohrende angebrachter Rohrführungskopf 7 erforderlich, ebenso wie bei Muffenrohrleitungen konische Blechhülsen 8 im Bereich der Muffen 6 von Muffenrohrstücken 5, um die neue Rohrleitung in der alten Rohrleitung ohne Behinderung und ohne Beschädigung der Korrosionsschutzschicht zu führen.

Statt einer Winde 11 läßt sich das Zugseil 9 auch von einem fahrbaren Zuggerät ziehen, jedoch läßt sich mittels einer Winde 11 das Einziehen einer neuen Rohrleitung am schnellsten und flexibelsten bewerkstelligen.

Das erfindungsgemäße Verfahren ist geräuschlos. Beschädigungen an der Außenisolierung der neu verlegten Rohrleitung beschränken sich auf den Bereich der äußeren Kunststoffbeschichtung. Bereiche von Richtungs- und Neigungs-Änderungen sowie Knicke werden bis zu dem geschilderten Grad schadlos durchfahren. Eventuell noch vorhandene Fehlstellen werden durch die satt umgebende alkalische Füllmasse gegen Korrosion geschützt.

Die Beeinträchtigungen des Straßenverkehrs sind aufgrund der wenigen erforderlichen Baugruben im Vergleich zu einer Linienbaustelle erheblich geringer. Vorhandene Oberflächen bleiben weitestgehend geschont und auch der Bestand vorhandener Straßenbäume wird nicht gefährdet.

Das erfindungsgemäße Verfahren ist sehr wirtschaftlich. Trotz der erforderlichen Ersatzversorgungsleitungen sind die Kosten um ca. 25 bis 30 % niedriger als bei einer herkömmlichen offenen Verlegung.

## Patentansprüche

1. Verfahren zum Verlegen unterirdischer Rohrleitungen, bei dem
- über einer bereits vorhandenen, zumindest vorübergehend abgesperrten Rohrleitung wenigstens eine Ziehgrube und wenigstens eine Einfädelgrube angelegt werden,
- die vorhandene Rohrleitung im Bereich der Ziehgrube über eine Länge getrennt wird, die den Betrieb einer Ziehvorrichtung und/oder das Herstellen einer Leitungsverbindung mit Rohren und Formstücken zuläßt,
- die vorhandene Rohrleitung im Bereich der Einfädelgrube über eine Länge getrennt wird, die das Einfädeln und Ansetzen von metallenen Rohrstücken mit einem geringeren Außendurchmesser als der Innendurchmesser der bereits vorhandenen Rohrleitung zuläßt,
- ein Rohrstück mit einem Rohrführungskopf in die vorhandene Rohrleitung eingeführt wird,
- ein weiteres Rohrstück mit dem freien Ende des eingeführten verbunden wird,
- das Einführen und Ansetzen von neuen Rohrstücken fortgesetzt wird, bis der Bereich der bisherigen Rohrleitung zwischen der Ziehgrube und der Einfädelgrube vollständig mit einer neuen Rohrleitung versehen ist, wobei
- die Rohrstücke untereinander und das zuerst einzuführende mit dem Rohrführungskopf mittels einer zugfesten Muffenverbindung verbunden werden, und
- jede Muffenverbindung der einzubringenden Rohrleitung mittels einer übergestülpten konischen Blechhülse geführt wird.

2. Verfahren zum Verlegen unterirdischer *Stahl*rohrleitungen, bei dem
- über einer bereits vorhandenen, zumindest vorübergehend abgesperrten Rohrleitung wenigstens eine Ziehgrube und wenigstens eine Einfädelgrube angelegt werden,
- die vorhandene Rohrleitung im Bereich der Ziehgrube über eine Länge getrennt wird, die den Betrieb einer Ziehvorrichtung und/oder das Herstellen einer Leitungsverbindung mit Rohren und Formstücken zuläßt,
- die vorhandene Rohrleitung im Bereich der Einfädelgrube über eine Länge getrennt wird, die das Einfädeln und Ansetzen von *Stahl*rohrstücken mit einem geringeren Außendurchmesser als der Innendurchmesser der bereits vorhandenen Rohrleitung zuläßt,
- ein *Stahl*rohrstück mit einem Rohrführungskopf in die vorhandene Rohrleitung eingeführt wird,
- ein weiteres *Stahl*rohrstück mit dem freien Ende des eingeführten verbunden wird,
- das Einführen und Ansetzen von neuen *Stahl*rohrstücken fortgesetzt wird, bis der Bereich der bisherigen Rohrleitung zwischen der Ziehgrube und der Einfädelgrube vollständig mit einer neuen *Stahl*rohrleitung versehen ist, wobei
- die *Stahl*rohrstücke untereinander und das zuerst einzuführende mit dem Rohrführungskopf verschweißt werden, und
- ein Korrosionsschutz aus einer doppelten, vorzugsweise mit Längsrippen versehenen Kunststoffschicht vorgesehen ist.

3. Verfahren nach Anspruch 1 oder 2, dadurch gekennzeichnet, daß die untereinander verbundenen Rohrstücke, durch den Rohrführungskopf geführt, durch die alte Rohrleitung gedrückt werden.

4. Verfahren nach Anspruch 1 oder 2, dadurch gekennzeichnet, daß die miteinander verbundenen Rohrstücke mittels eines am Rohrführungskopf befestigten Zugseils von der Ziehgrube aus durch die alte Rohrleitung gezogen werden.

5. Verfahren nach einem oder mehreren der Ansprüche 1 bis 4, dadurch gekennzeichnet, daß die einzubringende Rohrleitung mittels eines vorzugsweise konischen Rohrführungskopfs geführt wird.

6. Verfahren nach einem oder mehreren der Ansprüche 1 bis 5, dadurch gekennzeichnet, daß der Ringraum zwischen der vorhandenen und der eingebrachten Rohrleitung mit einem hydraulisch abbindenden fließfähigen Füllmaterial verfüllt wird.

7. Verfahren nach einem oder mehreren der Ansprüche 1 bis 6, dadurch gekennzeichnet, daß die vorhandene Rohrleitung zum Herstellen von Abzweigen bzw. Hausanschlußleitungen aufgetrennt und auf die freigelegte, eingebrachte Rohrleitung Stutzen aufgeschweißt oder Anbohrschellen angebracht werden.

8. Rohrleitung aus Muffenrohrstücken (5), über deren Rohrmuffen (6) konische Rohrführungshülsen (8) gestülpt sind, zum zerstörungsfreien Verlegen derartiger Rohrleitungen in bereits vorhandene Rohrleitungen (2) nach einem der Ansprüche 1 bis 7.

9. Rohrleitung nach Anspruch 8, gekennzeichnet durch einen auf den Rohranfang aufgesetzen, vorzugsweise konischen Rohrführungskopf (7).

## Claims

1. Method for laying underground pipelines, wherein
- at least one pulling pit and at least one threading pit are excavated over an existing, at least temporarily blocked pipeline,
- in the region of the pulling pit the existing pipeline is separated over a length sufficient to allow the operation of a pulling device and/or the formation of a pipeline connection with pipes and fittings,
- in the region of the threading pit the existing pipeline is separated over a length sufficient to allow the threading in and joining on of metallic pipe sections having an external diameter smaller than the internal diameter of the existing pipeline,
- a pipe section having a pipe guide head is introduced into the existing pipeline,
- a further pipe section is connected to the free end of the section last introduced,
- the introduction and joining on of new pipe sections is continued until the region of the former pipeline between the pulling pit and the threading pit is completely provided with a new pipeline,
- the pipe sections being connected by means of a tension-proof spigot-and-socket joint to one another and to the section with the pipe guide head which was introduced first, and
- each spigot-and-socket joint of the pipeline being introduced being guided by a conical sheet metal sleeve which has been slipped over it.

2. Method for laying underground steel pipelines, wherein
- at least one pulling pit and at least one threadinq pit are excavated over an existing, at least temporarily blocked pipeline,
- in the region of the pulling pit the existing pipeline is separated over a length sufficient to allow the operation of a pulling device and/or the formation of a pipeline connection with pipes and fittings,
- in the region of the threading pit the existing pipeline is separated over a length sufficient to allow the threading in and joining on of steel pipe sections having an external diameter smaller than the internal diameter of the existing pipeline,
- a steel pipe section having a pipe guide head is introduced into the existing pipeline,
- a further steel pipe section is connected to the free end of the section last introduced,
- the introduction and joining on of new steel pipe sections is continued until the region of the former pipeline between the pulling pit and the threading pit is completely provided with a new steel pipeline,
- the steel pipe sections being welded to one another and to the section with the pipe guide head which was introduced first, and
- corrosion protection means being provided, comprising a double layer of plastics material, preferably provided with longitudinal ribs.

3. Method according to claim 1 or claim 2, characterised in that the interconnected pipe sections, guided by the pipe guide head, are pushed through the old pipeline.

4. Method according to claim 1 or claim 2, characterised in that the interconnected pipe sections are pulled through the old pipeline from the pulling pit by means of a pulling cable fastened to the pipe guide head.

5. Method according to one or more of claims 1 to 4, characterised in that the pipeline being introduced is guided by means of a preferably conical pipe guide head.

6. Method according to one or more of claims 1 to 5, characterised in that the annular space between the existing and the introduced pipelines is filled with a hydraulically setting flowable filler material.

7. Method according to one or more of claims 1 to 6, characterised in that for the production of branch or house connection lines the existing pipeline is opened up and pipe stubs are welded on, or tapping sleeves attached, to the introduced pipeline which has been uncovered.

8. A pipeline comprising socketed pipe sections (5) over the sockets (6) of which conical pipe guide sleeves (8) are slipped, for non-destructive laying of pipelines of this kind in existing pipelines (2) as claimed in any of claims to 7.

9. A pipeline according to claim 8, characterised by a preferably conical pipe guide head (7) placed on the start of the pipe.

## Revendications

1. Procédé pour la pose de conduites souterraines, dans lequel
- au moins une fosse de traction et au moins une fosse d'enfilement sont ménagées au-dessus d'une conduite déjà existante, au moins provisoirement isolée,
- la conduite existante est séparée, dans la région de la fosse de traction, sur une longueur autorisant le fonctionnement d'un dispositif de traction, et/ou l'établissement d'une liaison de conduites à l'aide de tubes et de pièces profilées,
- la conduite existante est séparée, dans la région de la fosse d'enfilement, sur une longueur autorisant l'enfilement et le rattachement de pièces tubulaires métalliques présentant un diamètre extérieur plus petit que le diamètre intérieur de la conduite déjà existante,
- une pièce tubulaire, munie d'une tête guide-tubes, est introduite dans la conduite existante,
- une autre pièce tubulaire est reliée à l'extrémité libre de la pièce introduite,
- l'introduction et le rattachement de nouvelles pièces tubulaires sont poursuivis jusqu'à ce que la région de la conduite existante, entre la fosse de traction et la fosse d'enfilement, soit intégralement dotée d'une conduite neuve, procédé dans lequel
- la liaison des pièces tubulaires entre elles, et de celle à introduire en premier et munie de la tête guide-tubes, est assurée au moyen d'une solidarisation par manchons résistant à la traction, et
- chaque solidarisation par manchon, équipant la conduite à introduire, est guidée au moyen d'une douille tronconique en tôle mise en place par enfilement.

2. Procédé pour la pose de conduites souterraines *en acier,* dans lequel
- au moins une fosse de traction et au moins une fosse d'enfilement sont ménagées au-dessus d'une conduite déjà existante, au moins provisoirement isolée,
- la conduite existante est séparée, dans la région de la fosse de traction, sur une longueur autorisant le fonctionnement d'un dispositif de traction, et/ou l'établissement d'une liaison de conduites à l'aide de tubes et de pièces profilées,
- la conduite existante est séparée, dans la région de la fosse d'enfilement, sur une longueur autorisant l'enfilement et le rattachement de pièces tubulaires *en acier* présentant un diamètre extérieur plus petit que le diamètre intérieur de la conduite déjà existante,
- une pièce tubulaire *en acier,* munie d'une tête guide-tubes, est introduite dans la conduite existante,
- une autre pièce tubulaire *en acier* est reliée à l'extrémité libre de la pièce introduite,
- l'introduction et le rattachement de nouvelles pièces tubulaires *en acier* sont poursuivis jusqu'à ce que la région de la conduite existante, entre la fosse de traction et la fosse d'enfilement, soit intégralement dotée d'une conduite neuve *en acier,* procédé dans lequel
- l'on soude entre elles les pièces tubulaires *en acier,* et celle à introduire en premier et munie de la tête guide-tubes, et
- il est prévu une protection anticorrosion, constituée d'une double couche en matière plastique préférentiellement dotée de nervures longitudinales.

3. Procédé selon la revendication 1 ou 2, caractérisé par le fait que les pièces tubulaires reliées entre elles sont enfoncées à travers l'ancienne conduite, en étant guidées par la tête guide-tubes.

4. Procédé selon la revendication 1 ou 2, caractérisé par le fait que les pièces tubulaires reliées entre elles sont tirées à travers l'ancienne conduite, à partir de la fosse de traction, au moyen d'un câble de traction fixé à la tête guide-tubes.

5. Procédé selon l'une ou plusieurs des revendications 1 à 4, caractérisé par le fait que la conduite à introduire est guidée au moyen d'une tête guide-tubes préférentiellement tronconique.

6. Procédé selon l'une ou plusieurs des revendications 1 à 5, caractérisé par le fait que l'espace annulaire, entre la conduite existante et la conduite introduite, est comblé par un matériau de comblement coulant, à prise hydraulique.

7. Procédé selon l'une ou plusieurs des revendications 1 à 6, caractérisé par le fait que, pour réaliser respectivement des embranchements ou des raccordements domestiques, la conduite existante est ouverte par sectionnement, puis des manchons sont rapportés par soudage, ou des colliers de prise sont mis en place sur la conduite introduite dégagée.

8. Conduite constituée par des embouts tubulaires (5) sur les manchons (6) desquels des douilles tronconiques (8) guide-tubes sont enfilées, en vue de la pose de telles conduites dans des conduites (2) déjà existantes, sans destructions, conformément à l'une des revendications 1 à 7.

9. Conduite selon la revendication 8, caractérisée par une tête (7) guide-tubes, de préférence tronconique, mise en place sur le début des tubes.
